# EUROPEAN PATENT SPECIFICATION

(11) **EP 1 607 336 B1**
(45) Date of publication and mention of the grant of the patent: **14.03.2007**
(21) Application number: 05253200.9
(22) Date of filing: 25.05.2005
(51) Int. Cl.: B65D 3/22, B65D 65/40, B32B 15/08

(54) **Composite container liner with self-supporting sealant web**
Verbundbehälterliner mit selbsttragender Abdichtungsbahn
Revêtement avec bande d'étanchéité autoportante pour conteneur composite

(30) Priority: 18.06.2004 US 871254
(43) Date of publication of application: 21.12.2005
(73) Proprietor: Sonoco Development, Inc., Hartsville, South Carolina 29550 (US)
(72) Inventor: Drummond. Michael T, North Carolina 28352 (US)
(74) Representative: Kinsler, Maureen Catherine

(56) References cited:
- EP-A- 0 857 568
- EP-A- 0 952 087
- EP-A- 1 092 648
- US-B1- 6 244 500

## Description

### BACKGROUND OF THE INVENTION

### Field of the Invention

The present invention is related to liners for composite containers, and more particularly, to container liners formed as laminated structures including a self-supporting layer.

### Description of Related Art

Food and drink products and other perishable items are often packaged in tubular containers that are sealed at both ends. These tubular containers typically include at least one structural body ply and are formed by wrapping a continuous strip of body ply material around a mandrel of a desired shape to create a tubular structure. The body ply strip may be spirally wound around the mandrel or passed through a series of forming elements so as to be wrapped in a convolute shape around the mandrel. At the downstream end of the mandrel, the tube is cut into discrete lengths and is then fitted with end caps to form the container.

Tubular containers of this type typically include a liner ply, also called a liner, on the inner surface of the paperboard body ply. The liner prevents liquids such as juice from leaking out of the container and also prevents liquids and moisture vapor from entering the container and adversely affecting the food product contained therein. Preferably, the liner is also resistant to the passage of gases, so as to prevent odors of the food product in the container from escaping and to prevent atmospheric air from entering the container and spoiling the food product. Thus, the liner provides barrier properties and the body ply provides structural properties.

Conventional liners most often include aluminum foil, which has good barrier properties and also has advantageous strength properties. In particular, the liner is wound onto the mandrel prior to the winding of the body ply and must be sufficiently strong and stiff to be independently wound on the mandrel without stretching or wrinkling. In addition, the aluminum foil layer typically includes a kraft paper backing for allowing the foil layer to be adhered to the paperboard body ply. Because of the support provided by the kraft-backed foil layer of the liner, such liners are known as "supported" liners.

Aqueous based adhesives (or "wet adhesives") are preferred for adhering the liner to the body ply because solvent-based adhesives have become disfavored in light of various environmental concerns over their use and disposal. However, it has heretofore been difficult to get the aqueous adhesives to stick to the smooth and impervious surface of the aluminum foil layer. Accordingly, a kraft paper backing has been preadhered to the foil layer so that the liner can be adhered to the paperboard body ply with wet adhesives. Kraft paper also adds additional cost and thickness to the liner.

It is desirable to use unsupported liners that do not include kraft paper because of the cost and thickness. Unsupported liners offer advantages in addition to material and cost savings. More particularly, the elimination of the kraft layer enables straight overlap seams to be used in the liner, rather than the conventional "anaconda fold" seams traditionally used with kraft-backed liners. In an anaconda fold, the underlying edge of the liner is folded back onto itself and adhered to the overlying edge. The anaconda fold allows the polymeric layers on the surface of the foil layer to be heat sealed together. Alternatively, a hot melt adhesive can be used to seal the underlying edge of the liner to the overlying edge. The edge of the kraft paper thus is not exposed to the interior of the container and thus liquids in the container will not be absorbed by the kraft paper. An example of such a fold is illustrated in U.S. Pat. No. 5,084,284 to McDilda, et al.

Anaconda folds are undesirable, however, because of their increased thickness. The thickness of an anaconda fold seam is equal to three thicknesses of the liner. Thus, with relatively thick supported liners, the anaconda fold presents a substantial thickness and poses difficulties when attempting to hermetically seal the ends of the tubular container. Specifically, the ends of the tube are often rolled outwardly after being cut so as to form a rolled circular bead or flange on one or both ends of the tube and then end caps or membranes are applied and usually sealed to the bead with an adhesive sealant, heat sealing, or other technique. However, in the area where the thick anaconda fold seam forms a portion of the edge surface, the end surface of the bead or flange can be substantially non-planar thus forming hill-like and/or valley-like irregularities. Accordingly, an extra amount of adhesive sealant or heat seal material is required in order to fill the discontinuities and hermetically seal the tubular container. The additional application of adhesive sealant or heat seal material is disadvantageous because of the extra sealant that must be used and the increased difficulty in removing the seal by the consumer due to the additional sealant. For example, where a membrane includes a heat seal layer, the entire heat seal layer must be made thicker, even though the increased thickness is actually needed only around the periphery of the membrane where it contacts the bead.

Because of the problems noted above with respect to supported liners, efforts have been made toward developing methods and apparatus for making tubular composite containers having unsupported liners in which the foil and/or kraft layers are eliminated from the liner. Additionally, there have been sought methods and apparatus for making composite containers having liners formed without anaconda fold seams.

A liner formed of one or more relatively thin polymer layers, and possibly a relatively thin foil, would be particularly beneficial in that the kraft layer would be eliminated along with its attendant costs, and the liner seam would present a relatively slight bump at the curled end of the container so that problems of hermetically sealing closures on the container ends would be substantially reduced. Alternatively, the liners can be structurally supported by the inclusion of rigid films or films with relatively high moduli of elasticity, such as Oriented Polyethylene Terephthalate (OPET) or Oriented Polypropylene (OPP). However, such films are relatively expensive due to their slower converting speeds or extensive process controls to prevent quality issues such as bagginess.

Accordingly, the assignee of the present application has striven toward developing practicable methods and apparatus for making containers with such unsupported film liners. For example, the assignee of the present application has developed methods and apparatus for making composite containers with unsupported liners made of polymer film and without anaconda folds, as disclosed in commonly owned U.S. Pat. No. 5,829,669 entitled "Tubular Container and Methods and Apparatus for Manufacturing Same" issued Nov. 3, 1998, U.S. Pat. No. 6,244,500 entitled "Polymeric Liner Ply for Tubular Containers and Methods and Apparatus for Manufacturing Same" issued Jun. 12, 2001, and U.S. patent application Ser. No. 09/838,443 entitled "Tubular Composite Containers Having Unsupported Film Liners and Methods and Apparatus for Making Same" filed Apr. 19, 2001, the entire disclosures of which are hereby incorporated herein by reference.

The '669 and '500 patents disclose composite container-forming methods and apparatus wherein, according to one embodiment, a polymeric liner strip is adhesively joined to a paperboard body-forming strip prior to being wrapped about a shaping mandrel. By "prelaminating" the polymeric liner strip and paperboard strip together, the liner is effectively structurally supported by the paperboard strip so that it is relatively easily advanced to the mandrel without becoming excessively stretched or otherwise misshapen in the process. The polymeric liner strip is offset relative to the paperboard to which it is adhesively joined such that a marginal edge portion of the liner strip extends beyond one edge of the paperboard strip. The laminated paperboard/polymeric strip is wrapped about the mandrel so that the edges of the paperboard strip overlap each other and the marginal edge portions of the polymeric liner overlap each other. One of the marginal edge portions of the liner strip includes a non-aqueous adhesive layer that is heat activatable. Before and/or while the laminated paperboard/polymeric strip is wrapped about the mandrel, the non-aqueous adhesive layer on the marginal edge portion is heated to at least its activation temperature, and the overlapping edges are heat sealed together. Thus, the resulting composite container has a polymeric liner formed without anaconda fold seams.

However, it will be appreciated that both the liner supply and body ply supply rolls must be located on the same side of the mandrel, which can make the placement of the supply rolls and the routing of the plies to the mandrel more complicated than would otherwise be the case if both the liner and body plies did not have to approach the mandrel from the same side. Replacement of the rolls may also be more difficult where the two supply rolls are located close together as they would tend to be in order to make efficient use of space.

Furthermore, it should be appreciated that liners having kraft paper, metal foil layers of substantial thickness, rigid films, or films with relatively high moduli of elasticity may be manufactured, also called converted, relatively easily because such layers have sufficient structural strength to serve as a carrier web onto which additional layers or webs of the liner may be joined. However, liners without such materials are problematic to manufacture because the relatively thin or flexible materials of the liners may undesirably stretch or tear without the assistance of a carrier web having sufficient strength properties to support the liner during the manufacturing process.

In light of the foregoing, it would be highly desirable to provide methods and apparatus capable of making a container liner that is structurally supported without the use of kraft paper and that is conveniently manufactured prior to forming of the container. Such a liner would not require prelamination to a paperboard ply during the container-forming processes.

### BRIEF SUMMARY OF THE INVENTION

The present invention addresses the above needs and achieves other advantages by providing a container liner that includes a first sealant web of polyethylene, which forms one surface of the liner and defines a self-supporting layer of the liner, a second sealant layer forming the opposite surface of the liner, and a thin metal foil layer between the two sealant layers. The first sealant web also serves as a carrier web during the manufacturing of the liner. The liner construction obviates the need to include a kraft paper layer in the liner because the first sealant web provides structural support to the liner and because a second sealant layer adheres to the body ply of the container with typical wet adhesives. Accordingly, the liner of the present invention is not required to be prelaminated to a paperboard ply before the liner is wrapped around the mandrel and is therefore not required to be located on the same side of the mandrel, thus simplifying the replacement of the rolls of liners and paperboard plies.

In accordance with one embodiment of the present invention, the liner includes a first sealant web that comprises polyethylene and defines a self supporting layer of the liner. The first sealant web is preferably a coextruded web of ionomer and HDPE, and the ionomer is more preferably an ethylene acrylic acid ionomer. Alternatively, the first sealant web may comprise a coextruded web of HDPE and LDPE.

A metal foil layer is adhered to an outer surface of the first sealant web. The liner may include an adhesive layer for adhering the metal foil layer to the first sealant web, or alternatively, the metal foil layer may be extrusion bonded to the first sealant web. The metal foil layer preferably defines a thickness of less than 0.001 inch, and more preferably defines a thickness of less than 0.0005 inch. The second sealant layer comprises a polymer and is attached to the metal foil layer. The second sealant layer forms the opposite surface of the liner and is heat-sealable to the first sealant web, so that when the liner is wound about the mandrel, the liner is sealed with a lap seal rather than an anaconda fold. The second sealant layer preferably contains an ionomer, such as an ethylene acrylic acid ionomer.

The present invention also encompasses containers having such a liner for gas and moisture barrier properties. The container includes at least one body ply of fibrous paperboard that is wrapped to form a wall of the container. The liner is advantageously adhered to an inner surface of the wall of the container. Preferably, the liner is adhered to the inner surface of the wall to include a lap seal in the liner. In addition, the container preferably forms a tubular container body and may comprise a membrane lid sealed to an end of the wall of the container.

The present invention also provides methods of manufacturing a liner for a container. The liner is manufactured by advancing a first sealant web comprising polyethylene such that the first sealant web serves as a carrier web. A metal foil layer is adhered to an outer surface of the first sealant web. Advantageously, the metal foil layer may be adhesive-laminated to the first sealant web. Alternatively, the metal foil layer may be adhered to the first sealant web by extrusion bonding the metal foil layer to the first sealant web. In addition, a second sealant layer comprising a polymer is provided on the opposite surface of the metal foil layer from the first sealant web. The liner is then wound into a collection roll for subsequent use in the manufacture of a container.

Still further embodiments of the liner, container, and manufacturing methods are included in the present invention. Accordingly, the present invention provides a liner that includes a first sealant web that defines a self-supporting layer, which obviates the use of kraft paper and allows use of a relatively thin metal foil layer. In addition, the first sealant web serves as a carrier web during the manufacturing of the liner.

### BRIEF DESCRIPTION OF THE SEVERAL VIEWS OF THE DRAWINGS

Having thus described the invention in general terms, reference will now be made to the accompanying drawings, which are not necessarily drawn to scale, and wherein:
**FIG. 1** is a perspective view of a tubular container in accordance with one embodiment of the present invention, wherein the container includes a liner on an inner surface of the container wall;
**FIG. 2** is a cross-sectional view taken along line **2-2** of **FIG. 1** through the liner overlap joint of the container;
**FIG. 3** is a schematic cross-sectional view taken along line **3-3** of **FIG. 2** through the liner, wherein the liner comprises a first sealant web of polyethylene;
**FIG. 4** is a schematic cross-sectional view of a liner of a second embodiment of the present invention, wherein the liner comprises a first sealant web of a coextruded web of ionomer and HDPE;
**FIG. 5** is a schematic cross-sectional view of a liner of a third embodiment of the present invention, wherein the liner comprises a first sealant web of a coextruded web of HDPE and LDPE; and
**FIG. 6** is a schematic elevational view illustrating the manufacturing a liner of the present invention, wherein the first sealant web serves as a carrier web.

### DETAILED DESCRIPTION OF THE INVENTION

The present invention now will be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like numbers refer to like elements throughout.

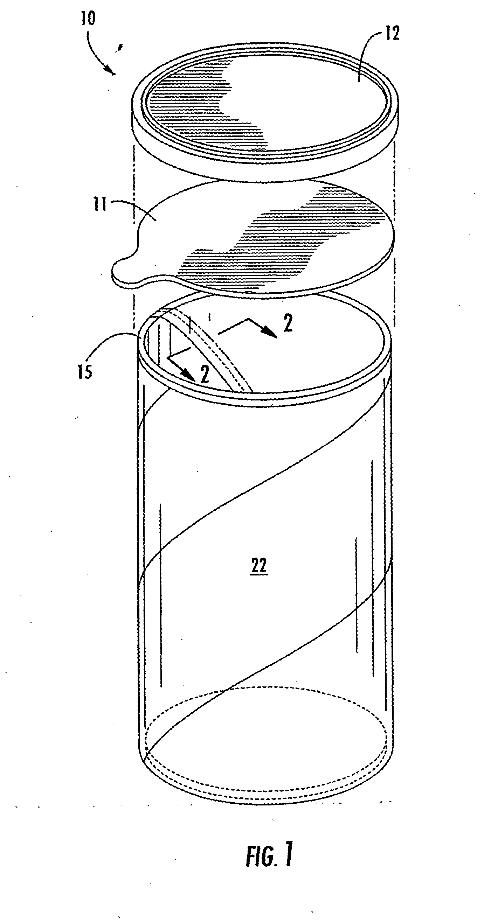

With reference to **FIGS. 1-3**, there is shown a container **10** having a liner with a self-supporting layer in accordance with one embodiment of the present invention. Although shown in **FIG. 1** as having a circular cross-section, the tubular container **10** may have any cross-sectional shape that can be formed by wrapping composite materials around an appropriately shaped mandrel. One non-limiting example of a non-tubular container is a tube with a rectangular shape having rounded corners. The container **10** of **FIG. 1** is particularly advantageous for packaging potato chips and includes a flexible membrane lid **11** and a reusable plastic end cap **12** over the lid. Various other end closures may be used, however, depending upon the type of product packaged in the container.

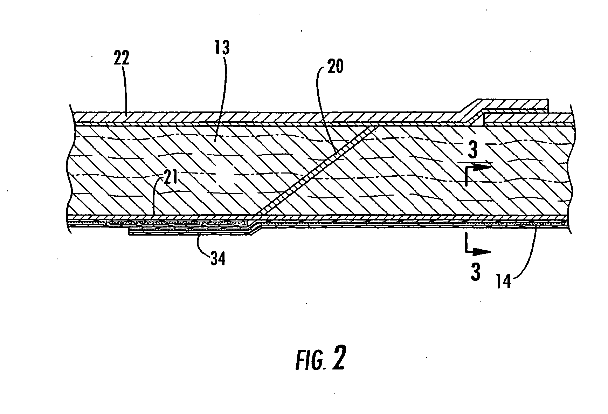

As illustrated in more detail in **FIG. 2**, the container **10** includes a wall having a body ply **13** that is preferably formed of paperboard and a liner **14** adhered to the inner surface of the body ply **13**. The upper end of the tubular container **10** is rolled over so as to form a bead **15** or flange, as shown in **FIG. 1**, and the membrane lid **11** is hermetically sealed to the top of the bead with an adhesive sealant (not shown). The end cap **12** is then snapped over the bead **15** and may be reused after the membrane lid **11** has been removed. A metal closure (not shown) can be secured to the opposite end of the container **10**.

The seams where the various plies are joined together are illustrated in **FIG. 2**. The paperboard body ply **13** is made of a relatively thick and stiff paperboard. Accordingly, in some types of containers such as refrigerated dough containers, the edges of the body ply are first skived and then joined together during the tube forming process with an adhesive **20** to create a strong seam. In other types of containers, the body ply can form a simple butt joint. The liner **14** is adhered to the inner surface of the body ply **13** with a wet adhesive **21** and the overlapping edges of the liner ply are adhered together at an overlap joint defining a lap seal to ensure that the container **10** is completely sealed. A label ply **22** is preferably adhered to the outer surface of the body ply **13**, the label ply having various graphics and/or indicia printed thereon regarding the product within the container.

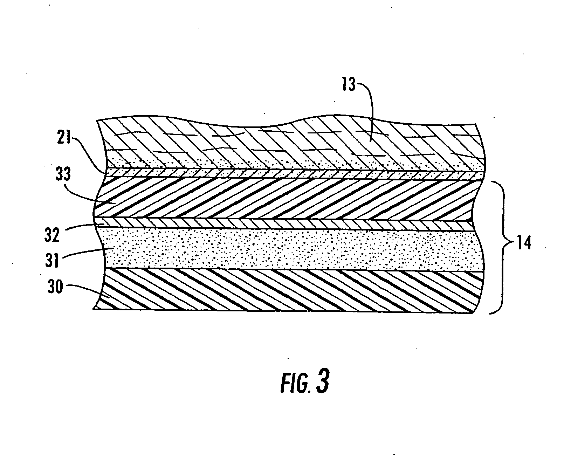

The liner **14** of one embodiment of the present invention is illustrated in **FIG. 3** and includes a first sealant web **30**, an adhesive layer **31**, a metal foil layer **32**, and a second sealant layer **33**. The first sealant web **30** exhibits sufficient strength properties to serve as a carrier web during the manufacturing, also called converting, of the liner **14**. In addition, the metal foil layer **32** is preferably aluminum defining a thickness of less than 0.001 inch, and more preferably defines a thickness of less than 0.0005 inch. Therefore, the liner includes a relatively small amount of metal material, thus reducing the cost of the liner. It should be appreciated that metal foil layers of further embodiments of the present invention may comprise alternative metal materials and/or define different thicknesses; however, it is preferable to use a minimal amount of metal material because of the relatively high cost of metals.

The first sealant web **30** comprises a polyethylene material, such as high density polyethylene (HDPE) to list one non-limiting example. Advantageously, the first sealant web **30** comprises a blown film of HDPE, such that the strength properties of the first sealant web are sufficient to support the liner **14** during the manufacturing of the liner. The self-supporting layer enables the liner **14** to be manufactured, or converted, by applying additional webs or layers to the self-supporting layer without undesirable stretching, tearing, or other deformation of the liner.

The first sealant web **30** defines an inner surface and an outer surface opposed to the inner surface. The inner surface of the first sealant web **30** advantageously defines the inner surface of the liner **14**. An adhesive layer **31** can be applied to the outer surface of the first sealant web **30** to adhere the metal foil layer **32** to the first sealant web. In an further embodiment of the present invention, the metal foil layer is adhesive-laminated to the first sealant web by alternative materials or techniques, the metal foil layer is extrusion-laminated to the first sealant web, or the metal foil layer is adhered to the first sealant web by alternative materials or techniques.

The metal foil layer **32** is resistant to the passage of liquids and gases such as oxygen. A preferred metal foil layer **32** is aluminum defining a thickness of less than 0.001 inch, or more preferably less than 0.0005 inch, between an inner surface of the metal foil layer and an outer surface of the metal foil layer opposed thereto. Preferably, the metal foil layer **32** defines a thickness of 0.000275 inches; however, alternative thicknesses of the metal foil layer are included in the present invention. As mentioned above, metal foil layers of further embodiments of the present invention may comprise alternative metal materials and/or define different thicknesses.

The liner **14** also includes a second sealant layer **33** attached to the outer surface of the metal foil layer **32**. The second sealant layer **33** of **FIG. 3** is advantageously extrusion coated onto the outer surface of the metal foil layer **32**; however, further embodiments of the present invention may attach the second sealant layer to the metal foil layer by alternative techniques and/or materials. The second sealant layer is advantageously a thin layer of polymer material. The second sealant layer **33** of **FIG. 3** advantageously comprises an ethylene acrylic acid ionomer, such as the material available from DuPont under the trademark TRANCEND®. Further embodiments of the present invention may comprise a second sealant layer of alternative polymer material, such as metallocenes, vinyl acetates, or the like, to list non-limiting examples. The second sealant layer **33** of **FIG. 3** defines an inner surface and an outer surface opposed thereto. The inner surface of the second sealant layer **33** is attached to the outer surface of the metal foil layer **32**. Referring to **FIG. 2**, the second sealant layer **33** of the present invention functions as an intermediate layer between the metal foil layer **32** and the inner surface of the body ply **13** of the container **10**, wherein the second sealant layer is adhered to the body ply by a wet adhesive **21** during the container-forming process. In addition, the second sealant layer **33** is heat-sealable to the first sealant web **30** such that the liner is sealed using a lap seal at the overlap joint **34**. Accordingly, the liner **14** does not require an anaconda fold, which would undesirably increase the thickness of the liner proximate the anaconda fold. The second sealant layer **33** is advantageously heat-sealed to the first sealant web 30 during the manufacture of the container. The container-forming process may include techniques disclosed in the '**443** application, to list one non-limiting example.

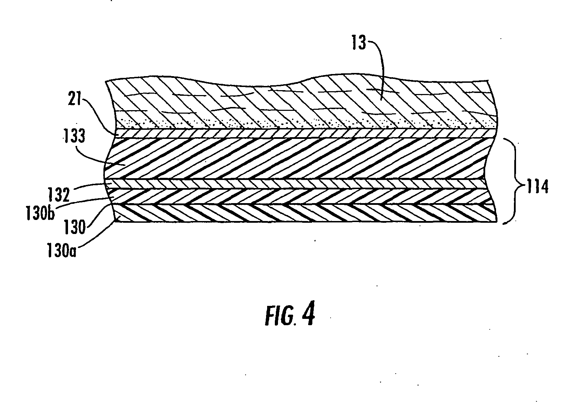

**FIG. 4** illustrates a liner **114** of a container according to a second embodiment of the present invention. The liner **114** includes a first sealant web **130** that comprises a co-extruded web of ionomer and HDPE. The first sealant web **130** of **FIG. 4** comprises an inner layer **130a** of ethylene methacrylic acid ionomer, such as the material available from DuPont under the trademark SURYLN®, and an outer layer **130b** of HDPE. The first sealant web of further embodiments of the present invention may comprise inner layers of alternative ethylene acrylic acid ionomers and outer layers of alternative polyethylenes. The first sealant web **130** of **FIG. 4** defines a self-supporting layer of the liner **114.** The first sealant web **130** exhibits sufficient strength properties to serve as a carrier web during the manufacturing of the liner **114.**

The liner **114** of **FIG. 4** also includes a metal foil layer **132** adhered to the first sealant web **130**. A second sealant layer **133** of polymer material is attached to the outer surface of the metal foil layer **132**, similar to the embodiment of **FIG**. **3**. The second sealant layer **133** is advantageously heat-sealable to the first sealant web **130**, and in particular the inner layer **130a** of the first sealant web.

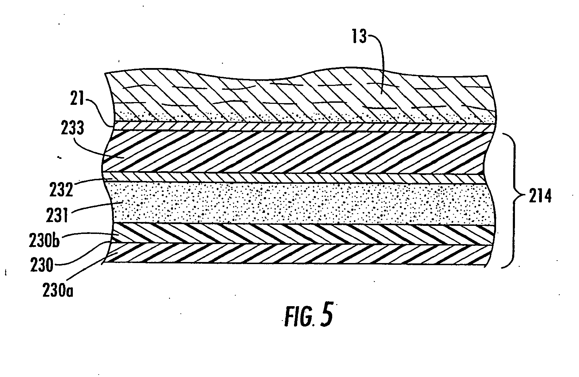

**FIG. 5** illustrates a liner **214** of a container according to a third embodiment of the present invention. The liner 214 includes a first sealant web **230** comprising a coextruded web of HDPE and LDPE. The first sealant web **230** of **FIG. 5** comprises an inner layer **230a** of HDPE, and an outer layer **230b** of LDPE. The first sealant web **230** of **FIG. 5** defines a self-supporting layer of the liner **214**. The first sealant web **230** also exhibits sufficient strength properties to serve as a carrier web during the manufacturing of the liner **214**.

The liner **214** of **FIG. 5** also includes a metal foil layer **232** adhered to the first sealant web **230** by an adhesive layer **231,** similar to the adhesive layer **31** of **FIG. 3**. The liner **214** of **FIG. 5** also includes a secondsealant layer **233** of polymer material attached to the outer surface of the metal foil layer **132,** also similar to the embodiment of **FIG. 3**. The second sealant layer **233** of **FIG. 5** is advantageously heat-sealable to the first sealant web **230**, and in particular, to the inner layer **230a** of the first sealant web. Further embodiments of the present invention may seal the second sealant layer to the first sealant web by alternative techniques or materials. Still further embodiments of the present invention include alternative first sealant webs of alternative polyethylene materials in single webs or coextruded webs or may include various combinations of the illustrated embodiments.

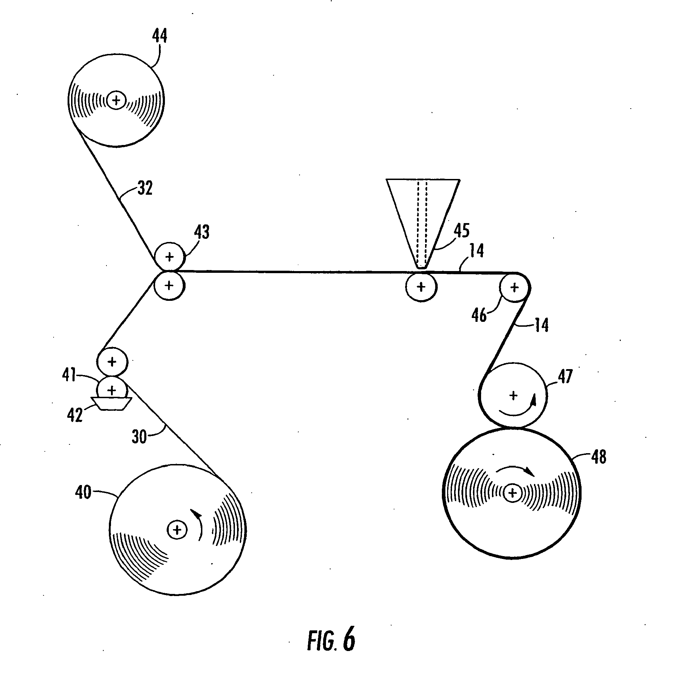

**FIG. 6** illustrates a manufacturing, or converting, process for the liner **14** of **FIGS. 1-3** according to one embodiment of the present invention. A first roll **40** of the first sealant web **30** is provided, wherein the first sealant web is advantageously manufactured previously by a blown film process (not illustrated). However, further embodiments of the present invention may provide the first sealant web **30** directly from the blown film process without the use of the first roll **40**. The first sealant web **30** comprises a polyethylene material, such as HDPE as discussed above, such that the first sealant web serves as a carrier web that supports the materials that are laminated to define the liner **14**. Accordingly, the first sealant web 30 defines a self-supporting layer. The first sealant web **30** is advanced to an adhesive laminating device **41**, wherein the inner surface of the first sealant web contacts a roller that is partially submerged in a basin **42** of adhesive such that the roller transfers adhesive to one surface of the first sealant web.

The adhesive-covered first sealant web **30** is then advanced to a lamination device **43** at which a metal foil layer **32** is drawn from a second roll **44** and is adhered to the first sealant web. The first sealant web **30** and adhered metal foil layer **32** are further advanced to an extrusion-coating device **45** that deposits the second sealant layer **33** onto an outer surface of the metal foil layer to define the liner **14**. The liner **14** is then advanced to a chill roll **46** that cools the liner by absorbing the heat primarily resulting from the extrusion-coating process. The liner **14** is then advanced around a drum **47** and wound into a collection roll **48**. The converted liner **14** on the roll **48** may subsequently be used in the manufacturing of containers **10**.

Many modifications and other embodiments of the invention set forth herein will come to mind to one skilled in the art to which the invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A liner (14) for providing a gas and moisture barrier for a container (10), the liner (14) comprising:
a first sealant web (30) comprising polyethylene and defining a self-supporting layer of the liner (14), wherein the first sealant web (30) defines an inner surface and an outer surface opposed thereto;
a metal foil layer (32) defining an inner surface and an outer surface, wherein the inner surface of the metal foil layer (32) is adhered to the outer surface of the first sealant web (30); and
a second sealant layer (33) comprising a polymer and defining an inner surface and an outer surface opposed thereto, wherein the inner surface of the second sealant layer (33) is attached to the outer surface of the metal foil layer (32), the second sealant layer (30) being heat-sealable to the first sealant web (30).

2. A liner according to Claim 1 wherein the first sealant web (30) comprises a coextruded web of ionomer and HDPE.

3. A liner according to Claim 1 wherein the first sealant web (30) comprises a coextruded web of HDPE and LDPE.

4. A liner according to Claim 1 wherein the second sealant layer (33) comprises an ionomer.

5. A liner according to Claim 1 wherein the metal foil layer (32) defines a thickness of less than 0.001 inch.

6. A container (10) that provides a gas and moisture barrier for a product, the container comprising:
at least one body ply (13) formed of fibrous paperboard wrapped to form a wall of the container (10), wherein the wall of the container (10) defines an inner surface; and
a liner (14) adhered to the inner surface of the wall, the liner (14) defining an overlap joint between opposite edges of the liner (14), and comprising:
a first sealant web (30) comprising polyethylene and defining a self-supporting layer of the liner (14); wherein the first sealant web (30) defines an inner surface and an outer surface opposed thereto;
a metal foil layer (32) defining an inner surface and an outer surface, wherein the inner surface of the metal foil layer (32) is adhered to the outer surface of the first sealant web (30); and
a second sealant layer (33) comprising a polymer and defining an inner surface and an outer surface opposed thereto, wherein the inner surface of the second sealant layer (33) is attached to the outer surface of the metal foil layer (32), the second sealant layer (33) being heat-sealed to the first sealant web (30) at the overlap joint.

7. A container according to Claim 6, further comprising a membrane lid (11) sealed to one end of the wall of the container (10).

8. A container according to Claim 6 wherein the first sealant web (30) comprises a coextruded web of ionomer and HDPE.

9. A container according to Claim 6 wherein the first sealant web (30) comprises a coextruded web of HDPE and LDPE.

10. A container according to Claim 6 wherein the second sealant layer (33) comprises an ionomer.

11. A container according to Claim 6 wherein the metal foil layer (32) defines a thickness of less than 0.001 inch.

12. A method of manufacturing a liner (14) for a container (10), comprising the steps of:
advancing a first sealant web (30) from a roll of the first sealant web to a laminating station (43), wherein the first sealant web (30) comprises polyethylene and serves as a carrier web;
advancing a metal foil layer (32) to the laminating station (43) and adhering an inner surface of the metal foil layer (32) to the first sealant web (30);
attaching a second sealant layer (33) comprising a polymer to an outer surface of the metal foil layer (32); and
advancing the liner (14) to a collection roll (48).

13. A method according to Claim 12 wherein attaching the second sealant layer (33) comprises extrusion-coating the second sealant layer (33) onto the outer surface of the metal foil layer (32).

14. A method according to Claim 12 wherein advancing the liner (14) to the collection roll (48) comprises advancing the liner (14) around a chill roll (46) prior to advancing the liner (14) to the collection roll (48).

## Patentansprüche

1. Auskleidung bzw. Liner (14) zur Bereitstellung einer Gas- und Feuchtigkeitsbarriere für einen Behälter (10), wobei die Auskleidung (14) umfasst:
eine erste Polyethylen aufweisende Abdichtungsbahn (30), welche eine selbst tragende Schicht der Auskleidung (14) definiert, wobei die erste Abdichtungsbahn (30) eine innere Oberfläche und eine äußere, der inneren entgegengesetzte Oberfläche definiert;
eine Metallfolienschicht (32), welche eine innere Oberfläche und eine äußere Oberfläche definiert, wobei die innere Oberfläche der Metallfolienschicht (32) an der äußeren Oberfläche der ersten Abdichtungsbahn (30) anhaftet; und
eine zweite ein Polymer aufweisende Abdichtungsbahn (33), welche eine innere Oberfläche und eine äußere, der inneren entgegengesetzte Oberfläche definiert, wobei die innere Oberfläche der zweiten Abdichtungsbahn (33) an der äußeren Oberfläche der Metallfolienschicht (32) befestigt ist, wobei die zweite Abdichtungsbahn (33) durch Hitze mit der ersten Abdichtungsbahn (30) versiegelt ist.

2. Auskleidung gemäß Anspruch 1, bei welcher die erste Abdichtungsbahn (30) eine coextrudierte Bahn aus einem Ionomer und HDPE aufweist.

3. Auskleidung gemäß Anspruch 1, bei welcher die erste Abdichtungsbahn (30) eine coextrudierte Bahn aus HDPE und LDPE aufweist.

4. Auskleidung gemäß Anspruch 1, bei welcher die zweite Abdichtungsbahn (33) ein Ionomer aufweist.

5. Auskleidung gemäß Anspruch 1, bei welcher die Metallfolienschicht (32) eine Dicke von weniger als 0,001 Zoll definiert.

6. Behälter (10), welcher eine Gas- und Feuchtigkeitsbarriere für ein Produkt liefert, wobei der Behälter (10) aufweist:
mindestens eine Körperschicht (13), die von einer faserigen Pappe gebildet wird und so gewickelt ist, dass sie eine Wand des Behälters (10) bildet, wobei die Wand des Behälters (10) eine innere Oberfläche definiert; und
eine Auskleidung (14), die an der inneren Oberfläche der Wand anhaftet, wobei die Auskleidung (14) eine Überlappungsverbindung zwischen entgegengesetzten Rändern der Auskleidung (14) definiert und aufweist:
eine erste Polyethylen aufweisende Abdichtungsbahn (30), welche eine selbst tragende Schicht der Auskleidung (14) definiert, wobei die erste Abdichtungsbahn (30) eine innere Oberfläche und eine äußere, der inneren entgegengesetzte Oberfläche definiert;
eine Metallfolierischicht (32), welche eine innere Oberfläche und eine äußere Oberfläche definiert, wobei die innere Oberfläche der Metallfolienschicht (32) an der äußeren Oberfläche der ersten Abdichtungsbahn (30) anhaftet; und
eine zweite ein Polymer aufweisende Abdichtungsbahn (33), welche eine innere Oberfläche und eine äußere, der inneren entgegengesetzte Oberfläche definiert, wobei die innere Oberfläche der zweiten Abdichtungsbahn (33) an der äußeren Oberfläche der Metallfolienschicht (32) befestigt ist, wobei die zweite Abdichtungsbahn (33) durch Hitze mit der ersten Abdichtungsbahn (30) an der Überlappungsverbindung versiegelt ist.

7. Behälter gemäß Anspruch 6, welcher ferner einen Membrandeckel (11) umfasst, welcher an einem Ende der Behälterwand (10) versiegelt ist.

8. Behälter gemäß Anspruch 6, bei welchem die erste Abdichtungsbahn (30) eine coextrudierte Bahn aus einem Ionomer und HDPE aufweist.

9. Behälter gemäß Anspruch 6, bei welchem die erste Abdichtungsbahn (30) eine coextrudierte Bahn aus HDPE und LDPE aufweist.

10. Behälter gemäß Anspruch 6, bei welchem die zweite Abdichtungsschicht (33) ein Ionomer aufweist.

11. Behälter gemäß Anspruch 6, bei welchem die Metallfolienschicht (32) eine Dicke von weniger als 0,001 Zoll definiert.

12. Verfahren zur Herstellung einer Auskleidung (14) für einen Behälter (10), welches als Verfahrensschritte aufweist:
ein Vorwärtsbewegen einer ersten Abdichtungsbahn (30) von einer Rolle von der ersten Abdichtungsbahn hin zu einer Laminierungsstation (22), wobei die erste Polyethylen aufweisende Abdichtungsbahn (30) als eine Trägerbahn dient;
ein Vorwärtsbewegen einer Metallfolienschicht (32) hin zu der Laminierungsstation (43) und ein Anheften einer inneren Oberfläche der Metallfolienschicht (32) an die erste Abdichtungsbahn (30); und
ein Befestigen einer zweiten ein Polymer aufweisenden Abdichtungsschicht (33), an eine äußere Oberfläche der Metallfolienschicht (32); und
ein Vorwärtsbewegen der Auskleidung (14) auf eine Sammelaufspulrolle (48).

13. Verfahren gemäß Anspruch 12, bei welchem das Befestigen der zweiten Abdichtungsschicht (33) aus einer Extrusionsbeschichtung der zweiten Abdichtungsschicht (33) auf die äußere Oberfläche der Metallfolienschicht (32) besteht.

14. Verfahren gemäß Anspruch 12, bei welchem ein Vorwärtsbewegen der Auskleidung (14) auf die Sammelaufspulrolle (48) ein Vorwärtsbewegen der Auskleidung (14) um eine Abkühlungsrolle (46) herum beinhaltet, bevor die Auskleidung (14) hin zu der Sammelaufspulrolle (48) vorwärts bewegt wird.

## Revendications

1. Revêtement (14) pour réaliser une barrière au gaz et à l'humidité pour un récipient (10), le revêtement (14) comprenant:
une première bande étanche (30) comprenant du polyéthylène et définissant une couche autoportante du revêtement (14), dans lequel la première bande étanche (30) définit une surface intérieure et une surface extérieure qui lui est opposée;
une couche à feuille métallique (32) définissant une surface intérieure et une surface extérieure, dans lequel la surface intérieure de la couche à feuille métallique (32) est collée sur la surface extérieure de la première bande étanche (30); et
une seconde couche étanche (33) comprenant un polymère et définissant une surface intérieure et une surface extérieure qui lui est opposée, dans lequel la surface intérieure de la seconde couche étanche (33) est fixée à la surface extérieure de la couche à feuille métallique (32); la seconde couche étanche (33) pouvant être scellée thermiquement à la première bande étanche (30).

2. Revêtement selon la revendication 1 dans lequel la première bande étanche (30) comprend une bande co-extrudée d'ionomère et de HDPE (polyéthylène haute densité).

3. Revêtement selon la revendication 1 dans lequel la première bande étanche (30) comprend une bande co-extrudée de HDPE (polyéthylène haute densité) et de LDPE (polyéthylène basse densité).

4. Revêtement selon la revendication 1 dans lequel la seconde couche étanche (33) comprend un ionomère.

5. Revêtement selon la revendication 1 dans lequel la couche à feuille métallique (32) définit une épaisseur inférieure à 0,001 pouce.

6. Récipient (10) qui forme une barrière au gaz et à l'humidité pour un produit, le récipient comprenant:
au moins une nappe formant corps (13) formée de carton fibreux enveloppée de manière à former une paroi du récipient (10), dans lequel la paroi du récipient (10) définit une surface intérieure; et
un revêtement (14) collé sur la surface intérieure de la paroi, le revêtement (14) définissant un joint à recouvrement entre les bords opposés du revêtement (14), et comprenant:
une première bande étanche (30) comprenant du polyéthylène et définissant une couche autoportante du revêtement (14), dans lequel la première bande étanche (30) définit une surface intérieure et une surface extérieure qui lui est opposée;
une couche à feuille métallique (32) définissant une surface intérieure et une surface extérieure, dans lequel la surface intérieure de la couche à feuille métallique (32) est collée sur la surface extérieure de la première bande étanche (30); et
une seconde couche étanche (33) comprenant un polymère et définissant une surface intérieure et une surface extérieure qui lui est opposée, dans lequel la surface intérieure de la seconde couche étanche (33) est fixée à la surface extérieure de la couche à feuille métallique (32); la seconde couche étanche (33) étant collée thermiquement à la première bande étanche (30) au niveau du joint à recouvrement.

7. Récipient selon la revendication 6, comprenant en outre un couvercle à membrane (11) scellé à une extrémité de la paroi du récipient (10).

8. Récipient selon la revendication 6, dans lequel la première bande étanche (30) comprend une bande co-cxtrudée d'ionomère et de HDPE (polyéthylène haute densité).

9. Récipient selon la revendication 6, dans lequel la première bande étanche (30) comprend une bande co-extrudée de HDPE (polyéthylène haute densité) et de LDPE (polyéthylène basse densité).

10. Récipient selon la revendication 6, dans lequel la seconde couche étanche (33) comprend un ionomère.

11. Récipient selon la revendication 6, dans lequel la couche à feuille métallique (32) définit une épaisseur inférieure à 0,001 pouce.

12. Procédé de fabrication d'un revêtement (14) pour un récipient (10), comprenant les étapes consistant à:
faire avancer une première bande étanche (30) à partir d'un rouleau de première bande étanche vers une station de stratification (43); dans lequel la première bande étanche (30) comprend du polyéthylène et sert de bande de support;
faire avancer une couche à feuille métallique (32) vers la station de stratification (43) et faire coller la surface intérieure de la couche à feuille métallique (32) sur la première bande étanche (30);
fixer une seconde couche étanche (33) comprenant un polymère sur la surface extérieure de la couche à feuille métallique (32); et
faire avancer le revêtement (14) vers un rouleau collecteur (48).

13. Procédé selon la revendication 12 dans lequel la fixation de la seconde couche étanche (33) comprend le revêtement par extrusion de la seconde couche étanche (33) sur la surface extérieure de la couche à feuille métallique (32).

14. Procédé selon la revendication 12 dans lequel la progression du revêtement (14) vers le rouleau collecteur (48) comprend la progression du revêtement (14) autour d'un rouleau de refroidissement (46) avant la progression du revêtement (14) vers le rouleau collecteur (48).
